# EUROPÄISCHE PATENTSCHRIFT

(11) **EP 2 842 671 B1**
(45) Veröffentlichungstag und Bekanntmachung des Hinweises auf die Patenterteilung: **25.01.2017**
(21) Anmeldenummer: 14181176.0
(22) Anmeldetag: 15.08.2014
(51) Int. Cl.: B23B 31/40

(54) **Spannvorrichtung**
Clamping device
Dispositif de serrage

(30) Priorität: 02.09.2013 DE 102013217401
(43) Veröffentlichungstag der Anmeldung: 04.03.2015
(73) Patentinhaber: Ringspann GmbH, 61348 Bad Homburg (DE)
(72) Erfinder: Schlautmann, Volker, 64347 Griesheim (DE)
(74) Vertreter: Lemcke, Brommer & Partner Patentanwälte Partnerschaft mbB

(56) Entgegenhaltungen:
- EP-A1- 1 629 937
- DE-A1- 1 943 325
- DE-A1- 3 540 890
- DE-C- 846 948
- GB-A- 1 397 085
- US-A- 2 680 623
- US-A- 2 838 317
- US-A- 3 025 737
- US-A1- 2006 104 711

## Beschreibung

Die vorliegende Erfindung betrifft eine Spannvorrichtung zum Spannen und Zentrieren eines Bauteils, insbesondere eines zu bearbeitenden Werkstücks oder eines Werkzeugs nach dem Oberbegriff des Anspruchs 1.

Eine derartige Spannvorrichtung kann z.B. ein Spanndorn oder ein Spannfutter sein. Ein Spanndorn dient zum Innenspannen eines nabenförmigen Bauteiles, indem entlang eines Umfangs angeordnete Spannbacken in einer Innenbohrung des Bauteiles aufgespreizt werden. Ein Spannfutter dient umgekehrt zum Außenspannen eines Bauteiles, indem Spannbacken um einen Außenumfang des Bauteiles gespannt werden. In beiden Fällen erfolgt ein Spannen des Bauteiles durch radial wirkenden Kraftschluss.

Eine Spannvorrichtung nach dem Oberbegriff des Anspruchs 1 ist aus der DE 32 23 748 C2 bekannt. Darüber hinaus beschreibt die DE 43 17 170 C2 ein Dehnspannwerkzeug, bei dem ein Axialrückzug eines zu bearbeitenden Werkstücks erfolgt.

Aus dem Markt bekannt sind beispielsweise Spreizdorne, bei denen eine rohrförmige, mehrfach längs geschlitzte Spreizbüchse durch einen inneren, längs verschieblichen Kegel aufgeweitet wird, um ein Bauteil in seiner Bohrung zentrisch aufzuspannen. Solche Spreizdorne haben den Nachteil, dass ihre Steifigkeit gegenüber quer wirkenden Bearbeitungskräften gering ist. Außerdem ist nicht sichergestellt, dass das Bauteil definiert an einer Anlagefläche der Spannvorrichtung anliegt. Beides führt zu Ungenauigkeiten bei der Bearbeitung. Aufgabe der Erfindung ist es daher, eine Spannvorrichtung der eingangs genannten Art anzugeben, welche eine höhere Bearbeitungsgenauigkeit ermöglicht.

Die Schrift DE 1943325 offenbart eine Spannvorrichtung zum Spannen eines Bauteiles, insbesondere eines Werkstückes oder Werkzeugs, mit einer Anzahl entlang eines Umfanges verteilter Spannbacken, die mit einem Grundkörper verbunden sind, wobei die Spannbacken mittels einer axial beweglichen Betätigungsvorrichtung in einer im Wesentlichen radialen Richtung von einer Freigabeposition in eine Halteposition verstellbar sind, wobei die Betätigungsvorrichtung derart ausgebildet ist, dass sie beim Spannen eine gegen die Federkraft der Spannbacken gerichtete radiale Spannkraft auf die Spannbacken ausübt.

Die Schrift US 2006/010477 zeigt einen Spanndorn mit einer geschlitzten Spannhülse, die als äußere Spannfläche zum Innenspannen eines ringförmigen Bauteils dient. Unter Zugkraft verringert sich der Außendurchmesser der Spannhülse, so dass das ringförmige Bauteil aufgeschoben werden kann und beim Entspannen der Spannhülse von innen gespannt wird. Die Spannkraft muss hier durch die Federkraft der Spannhülse aufgebracht werden.

Die Schrift DE 3540890 zeigt eine Spannvorrichtung für eine Zahnradstange, bei der eine Spannhülse mit ringförmiger Wellung verwendet wird, die beim axialen Zusammendrücken eine Verringerung ihres Innendurchmessers erfährt, um die Zahnradstange an deren Zähnen aufzunehmen.

Die Schrift DE 846948 zeigt eine Spannvorrichtung mit einem Spannkörper, der bei axialer Krafteinwirkung seinen Spanndurchmesser durch elastische Verformung verändert. Auch hier muss die Spannkraft über die elastische Eigenschaften des Spannkörpers aufgebracht werden.

Die Aufgabe wird gelöst durch die Merkmale des Anspruchs 1. Vorteilhafte Weiterbildungen sind den abhängigen Ansprüchen zu entnehmen.

Bei einer Spannvorrichtung mit einer Anzahl entlang eines Umfangs verteilter Spannbacken, die über entsprechende elastische Biegestege mit einem Grundkörper verbunden sind und mittels einer vorzugsweise beweglichen Betätigungsvorrichtung in einer im Wesentlichen radialen Richtung von einer Freigabeposition in eine Halteposition verstellbar sind, wird dies dadurch erreicht, dass die Biegestege in ihrer Freigabeposition gegenüber einer achsparallelen Richtung radial in Richtung ihrer jeweiligen Halteposition geneigt sind.

Um das Anpressen des zu spannenden Bauteils an eine axiale Anlagefläche zu unterstützen, soll beim Spannen ein sogenannter Axialrückzug erfolgen. Durch die bereits in der Freigabeposition vorhandene Neigung der Biegestege wird erreicht, dass die Spannbacken während der Aufweitung nicht eine rein radiale Bewegung ausführen, sondern dass sie sich gleichzeitig axial auf den Grundkörper zu bewegen, an dem sich die axiale Anlagefläche befindet. Grund hierfür ist, dass die Spannbacken bei Aufweitung eine annähernd kreisförmige Bewegung um den Bereich ausführen, an dem sie am Grundkörper enden. Da bei einem Spanndorn der Mittelpunkt dieses Kreisbogens auf einem kleineren Durchmesser liegt als die Spannbacken, werden die Spannbacken bei ihrer radialen Aufweitbewegung gleichzeitig axial in Richtung auf den Grundkörper bewegt und pressen das zu spannende Teil somit gegen die axiale Anlagefläche. Dadurch ist die Position des Bauteils eindeutig definiert, das Spannen erfolgt mit höherer Genauigkeit.

Der Winkel, mit dem die Biegestege in der Freigabeposition gegenüber der achsparallelen Richtung geneigt sind, beträgt 3 bis 12 Grad, vorzugsweise 5 bis 10 Grad, höchstvorzugsweise 6 Grad.

Bei einer Weiterbildung der Erfindung, die unabhängig von der Neigung der Biegestege realisierbar ist, sind in der Verlängerung der Biegestege, welche die Spannbacken mit dem Grundkörper der Spannvorrichtung verbinden, über die Spannbacken hinausstehende Verlängerungsstege vorgesehen, die an ihren Enden über ein ringförmiges Abschlussstück starr miteinander verbunden sind. Durch diese Maßnahmen wird die Quersteifigkeit der Spannvorrichtung verbessert. Das für die Quersteifigkeit der Spannvorrichtung maßgebliche Flächenträgheitsmoment ist bei einer Anordnung mit an beiden Enden verbundenen Biegestegen um ein mehrfaches größer als die Summe der Flächenträgheitsmomente der einzelnen Biegestege, wenn diese am vorderen Ende nicht verbunden wären.

Zwar besteht nach Vollendung des Spannvorgangs Reibschluss zwischen den Spannbacken und dem gespannten Bauteil. Damit sind die Spannbacken axial unverschieblich gehalten, was den gleichen Versteifungseffekt zur Folge haben sollte, der durch das ringförmige Abschlussstück erreicht wird. Überraschenderweise haben jedoch Versuche der Anmelderin ergeben, dass durch die über das ringförmige Abschlussstück starr miteinander verbunden Verlängerungsstege eine höhere Spanngenauigkeit gegenüber bekannten Spreizdornen erzielt wird. Insbesondere konnten bei Versuchen der Anmelderin Rundlauffehler von nur wenigen µm erreicht werden, was mit den bisher verwendeten Spreizdornen nicht möglich war. Als Erklärung hierfür fand die Anmelderin letztlich, dass die Ursache nur in der Quersteifigkeit der Spannvorrichtung liegen kann, welche im Verlaufe, also während des Spannvorgangs eine am Umfang gleichmäßige, von Spannvorgang zu Spannvorgang genau gleiche radial Aufspreizung der Spannbacken erzwingt.

Bei einer bevorzugten Ausführungsform sind die Verlängerungsstege in der Freigabeposition entgegengesetzt zu den Biegestegen geneigt. Insbesondere können die Verlängerungsstege und Biegestege in etwa spiegelsymmetrisch zu einer radial durch die Spannbacken verlaufenden Spiegelebene angeordnet sein. Hierdurch kann eine Konizität der Spannflächen der Spannbacken im aufgespreizten Zustand verhindert werden.

Die Biegestege können beispielsweise von Segmentenstreifen einer vom Befestigungsende her geschlitzten Spreizbüchse oder Spannhülse gebildet werden. Hierdurch ergibt sich eine fertigungstechnisch einfach zu realisierende Anordnung, welche eine hohe Biegesteifigkeit erreicht.

Die Betätigungsvorrichtung, mit der die Spannbacken in die Halteposition verstellt werden, umfasst vorzugsweise ein Betätigungselement, welches bei einer Bewegung in axialer Betätigungsrichtung unter Krafteinwirkung eine radiale Spannkraft auf die Spannbacken ausübt. Eine solche radiale Spannkraft kann mittels eines elastischen Elements ausgeübt werden, welches bei axialer Kompression durch das Betätigungselement eine radiale Dimensionsänderung erfährt. Vorzugsweise handelt es sich bei einem solchen elastischen Element, um mehrere flachkegelige Ringe aus Federstahl mit einer charakteristischen Schlitzung aus alternierenden Schlitzen im Innen- und Außendurchmesser des Rings, insbesondere um mehrere RINGSPANN®-Scheiben.

Alternativ kann das Betätigungselement auch eine konische Gleitfläche aufweisen, die mit entsprechend geformten Anlageflächen der Spannbacken zusammenwirkt, um eine radiale Spannkraft auf die Spannbacken auszuüben.

Als besonders vorteilhaft erweist es sich, wenn das ringförmige Abschlussstück gleitend gegenüber dem Betätigungselement gelagert wird. Hierdurch lässt sich die Steifigkeit gegenüber quer wirkenden Bearbeitungskräften weiter erhöhen, da das ringförmige Abschlussstück, und mit ihm die über die Verlängerungsstege verbundenen Spannbacken, bei quer wirkender Beanspruchung über die Lagerung am Betätigungselement abgestützt werden.

Die Spannvorrichtung kann als Spanndorn zum Innenspannen in einer entsprechenden Bohrung des Bauteiles oder als Spannfutter zum Außenspannen an einem entsprechenden Außenumfang des Bauteiles ausgebildet sein.

Die erfindungsgemäße Spannvorrichtung hat insbesondere eine gegenüber dem Grundkörper feste axiale Anlagefläche, gegen welche das Bauteil beim Spannen axial angedrückt wird. Die Anlagefläche, an der das gespannte Bauteil mit Kraftschluss anliegt, definiert eine präzise Spannposition.

Darüber hinaus betrifft die Erfindung eine Werkzeugmaschine mit einer erfindungsgemäßen Spannvorrichtung. Eine bevorzugte Anwendung der erfindungsgemäßen, hochgenauen Spannvorrichtung ergibt sich insbesondere bei der Schleifbearbeitung von Werkstücken.

Weitere Merkmale und Vorteile der Erfindung ergeben sich aus der nachfolgenden Beschreibung von Ausführungsbeispielen und aus den Zeichnungen. Es zeigt
- Figur 1: einen Axialschnitt eines erfindungsgemäßen Spanndorns entlang einer Längsachse in einem ersten Ausführungsbeispiel;
- Figur 2: eine isometrische Darstellung des Spanndorns aus Figur 1,
- Figur 3: ein zweites Ausführungsbeispiel eines erfindungsgemäßen Spanndorns in einem Axialschnitt,
- Figur 4: ein drittes Ausführungsbeispiel eines erfindungsgemäßen Spanndorns in einem Axialschnitt,
- Figur 5: einen Axialschnitt eines erfindungsgemäßen Spannfutters und
- Figur 6: eine isometrische Darstellung des Spannfutters aus Figur 5 (geschnitten entlang der Längsachse senkrecht zu dem in Figur 5

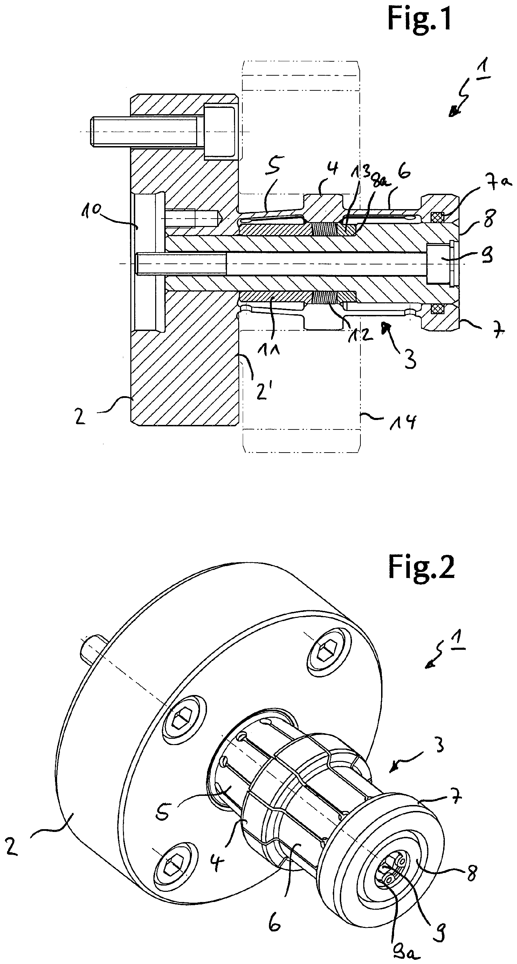

In Figur 1 ist ein erstes Ausführungsbeispiel eines erfindungsgemäßen Spanndorns 1 dargestellt, der beispielsweise verwendet werden kann, um ein Werkstück 14 (strichpunktiert gezeichnet) an der Arbeitsspindel einer Werkzeugmaschine zu spannen und zu zentrieren. Der Spanndorn hat einen Grundkörper 2, mit dem er mittels Befestigungsschrauben an der Arbeitsspindel einer Werkzeugmaschine verschraubt werden kann. Mit dem Grundkörper 2 ist eine längs geschlitzte Spreizbüchse 3 einstückig verbunden. Die Spreizbüchse 3 weist in einem mittleren Bereich einen ringförmigen Vorsprung auf, der als Spannfläche dient. Durch die Längsschlitze ist die Spreizbüchse 3 in eine Vielzahl von Segmentstreifen unterteilt; im Ausführungsbeispiel sind dies zehn Segmentstreifen. Die Segmentabschnitte des als Spannfläche dienenden ringförmigen Ansatzes bilden einzelne Spannbacken 4. Der segmentförmig unterteilte Bereich zwischen den Spannbacken 4 und dem Grundkörper 2 stellt elastische Biegestege 5 dar, welche die Spannbacken 4 mit dem Grundkörper 2 federnd verbinden. In diesem Bereich verjüngt sich die Spreizbüchse 3 konisch von den Spannbacken 4 zum Grundkörper 2 hin, so dass die Biegestege in ihrer entspannten Position (Freigabeposition) ausgehend vom Grundkörper 2 radial nach außen geneigt sind, und zwar im Ausführungsbeispiel um einen Winkel von etwa 6 Grad gegenüber der Dornachse.

An der vom Grundkörper 2 abgelegenen Seite der Spreizbüchse 3 setzen sich die Biegestege 5 zu segmentförmig unterteilten Verlängerungsstegen 6 fort, die ebenfalls biegeelastisch verformbar sind. Die Verlängerungstege 6 enden an einem ringförmigen Abschlussstück 7, in dessen Bereich die Spreizbüchse 3 ungeschlitzt ist. Die Segmentstreifen der Spreizbüchse 3 sind somit an dem ringförmigen Abschlussstück 7 starr miteinander verbunden. Durch die an beiden Enden starre Verbindung ihrer Segmentstreifen erhält die geschlitzte Spreizbüchse 3 näherungsweise die Quersteifigkeit eines ungeschlitzten Rohres.

Die Spreizbüchse 3 ist innen hohl. In ihrem Inneren ist ein Betätigungselement 8 eingebaut, welches sich auch durch eine Axialbohrung des Grundkörpers 2 fortsetzt. Das Betätigungselement 8 ist als innen ausgebohrter Spannbolzen ausgeführt, der mittels einer Zugschraube 9 gegen ein Widerlager 10 auf der Rückseite des Grundkörpers 2 verspannbar ist. Der Spannbolzen 8 trägt im Inneren der Spreizbüchse 3 eine Hülse 11, die sich gegen den Grundkörper 2 abstützt und als Distanzelement für eine oder mehrere auf Höhe der Spannbacken 4 auf dem Spannbolzen 8 sitzende RINGSPANN®-Scheiben 12 dient. Auf der anderen Seite der RINGSPANN®-Scheiben 12 trägt der Spannbolzen 8 einen ebenfalls als Distanzelement dienenden Ring 13. An seinem den RINGSPANN®-Scheiben abgewandten Ende stützt sich der Ring 13 axial an einer Schulter 8a des Spannbolzens 8 ab.

Wird nun die Zugschraube 9 in ihr Widerlager 10 eingeschraubt, so drückt die Schulter 8a des Spannbolzens 8 die RINGSPANN®-Scheiben 12 zwischen den Distanzelementen 11 und 13 axial zusammen. Diese axiale Betätigungskraft bewirkt eine elastische Veränderung des Kegelwinkels und damit des Durchmessers der RINGSPANN®-Scheiben. Da sich der Innendurchmesser der RINGSPANN®-Scheiben 12 am Schaft des Spannbolzens 8 abstützt, vergrößert sich deren Außendurchmesser und spreizt die Spannbacken 4 gegen die Federkraft der Biegestege 5 und Verlängerungsstege 6 nach außen. Hierdurch wird das Werkstück 14 an seinem Innendurchmesser gespannt und auf die Achse des Spanndorns 1 zentriert.

Da die Länge der Biegestege 5 konstant bleibt, verkürzt sich durch den Neigungswinkel der Biegestege 5 gegenüber der Längsachse der axiale Abstand der Spannbacken 4 zum Grundkörper 2. Aufgrund dieser Abstandsverkürzung erfährt das gespannte Werkstück 14 einen Axialrückzug bzw. eine Andruckkraft gegen die axiale Anlagefläche 2' des Grundkörpers 2. Der Axialrückzug entspricht dabei in etwa (unter Vernachlässigung der Durchbiegung der Biegestege) der Differenz der Cosinus-Winkelfunktionen der Winkel der Biegestege 5 in Freigabeposition und Halteposition multipliziert mit der Länge der Biegestege. Je größer also der Neigungswinkel der Biegestege in der Freigabestellung ist, umso größer ist auch der Axialrückzug, den die Spannbacken beim Aufspreizen erfahren bzw. auf das Werkstück ausüben. Ein Winkelbereich von 3 bis 12 Grad in der Freigabeposition hat sich hierbei als vorteilhaft erwiesen.

Da sich der Spannbolzen 8 beim Spannvorgang axial bewegt, ist das ringförmige Abschlussstück 7 gleitend auf dem Spannbolzen 8 gelagert. Die gleitende Lagerung wird durch passgenaue Fertigung der Bohrung des ringförmigen Abschlussstücks 7 und des Außendurchmessers des Spannbolzens 8 erreicht. In eine Nut im Innenumfang des ringförmigen Abschlussstücks 7 ist außerdem ein Dichtring 7a eingelegt, der das ringförmige Abschlussstück 7 gegen den Außendurchmesser des Spannbolzens 8 dichtet. Der Dichtring 7a kann beispielsweise ein O-Ring aus PTFE, Gummi oder ein Gewebering sein.

In Figur 2 ist der Spanndorn 1 in einer isometrischen Darstellung gezeigt. Deutlich zu erkennen ist die geschlitzte Spreizbüchse 3 mit ihrer ringförmigen Spannfläche aus kreissegmentförmig angeordneten Spannbacken 4. Durch den im Inneren der Spreizbüchse 3 befindlichen Spannbolzen 8, welcher mittels der Zugschraube 9 gegen den Grundkörper 2 gespannt wird, wird die Spreizbüchse 3 aufgespreizt um ein Werkstück (nicht gezeigt) zu spannen. Ein Innensicherungsring 9a, der in einer entsprechenden Nut im Endbereich der Axialbohrung des Spannbolzens 8 liegt, sorgt dafür, dass die Zugschraube 9 auf den Spannbolzen 8 beim Herausdrehen auch eine Zugkraft ausüben kann, um diesen gegen mögliche Klemmkräfte durch die RINGSPANN®-Scheiben in einer Verriegelungsposition wieder aus der Spreizbüchse 3 herauszuziehen und die Spannbacken 4 so wieder zu lösen.

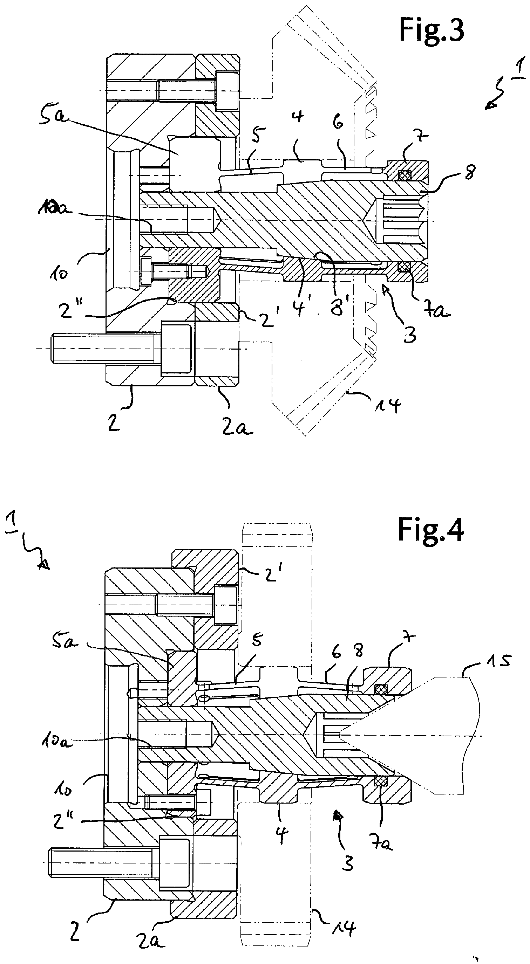

Ein zweites Ausführungsbeispiel eines erfindungsgemäßen Spanndorns 1 ist in einem Längsschnitt in Figur 3 gezeigt. Hierbei sind, wie in den übrigen Figuren auch, gleiche und gleichwirkende Merkmale mit gleichen Bezugszeichen versehen. In dem zweiten Ausführungsbeispiel ist auf den Grundkörper 2 eine separate ringförmige Anlageplatte 2a geschraubt, die die Anlagefläche 2' für ein zu spannendes Werkstück 14 bildet. Auch die Spreizbüchse 3 ist im zweiten Ausführungsbeispiel nicht einteilig mit dem Grundkörper 2 verbunden, sondern als separates Teil ausgebildet und in einer zylindrischen Ausnehmung 2" des Grundkörpers 2 von dessen Rückseite her verschraubt.

Die Spreizbüchse 3 im zweiten Ausführungsbeispiel hat einen ringförmigen Fußbereich 5a von dem aus die Biegestege 5 zu den Spannbacken 4 führen. An der entgegengesetzten Seite der Spannbacken 4 führen biegeelastische Verlängerungsstege 6 zu dem ringförmigen Abschlussstück 7 der Spreizbüchse 3. Vorteilhaft an dieser Konstruktion ist, dass die Spreizbüchse 3 bereits in ihrem Fußbereich 5a bis kurz vor dem ringförmigen Abschlussstück 7 durchgehend geschlitzt werden kann, was fertigungstechnisch einfacher zu realisieren ist als eine nur abschnittsweise Schlitzung wie im ersten Ausführungsbeispiel. Da der Fußbereich 5a der Spreizbüchse 3 in der zylindrischen Ausnehmung 2" festgelegt und von der Rückseite des Grundkörpers 2 mittels entsprechender Schraubverbindungen jeweils an den Segmenten des Fußbereichs verschraubt ist, wirkt sich die Schlitzung im Fußbereich 5a der Spreizbüchse 3 nicht nachteilig aus.

Als Betätigungsmechanismus zum Aufspreizen der Spannbacken 4 dient hier ein konisch zulaufender Spannbolzen 8, der mit der Kraftspanneinrichtung der Werkzeugmaschine verschraubt wird. Radial innerhalb der Spannbacken 4 hat der Spannbolzen 8 eine konisch verlaufende Gleitfläche 8', die gegen entsprechend geformte Anlageflächen 4' der Spannbacken 4 anliegt. Durch die konische Form werden die Spannbacken 4 bei Betätigung der Kraftspanneinrichtung auseinandergedrückt und spannen so ein Werkstück 14 in seiner Innenbohrung.

An seinem freien Ende weist der Spannbolzen 8 eine Zahnung für ein entsprechendes Spannwerkzeug auf. Das ringförmige Abschlussstück 7 ist wie im ersten Ausführungsbeispiel mittels eines Dichtrings 7a gleitend am Außenumfang des Spannbolzens 8 gelagert.

In Figur 4 ist ein drittes Ausführungsbeispiel eines erfindungsgemäßen Spanndorns 1 gezeigt. Wie im zweiten Ausführungsbeispiel ist die Spreizbüchse 3 als separates Teil ausgeführt und mit seinem Fußbereich 5a in einer zylindrischen Ausnehmung 2" des Grundkörpers 2 verschraubt. Die Verschraubung des ringförmigen Fußteils 5a der Spannbüchse 3 in der zylindrischen Ausnehmung 2" des Grundkörpers 2 erfolgt hier jedoch von der Vorderseite, so dass die Spannbüchse 3 bei Werkstückwechsel ausgetauscht werden kann, ohne dass der Grundkörper 2 des Spanndorns von der Werkzeugmaschine abmontiert werden muss.

Das Aufspreizen der Spannbacken 4 erfolgt wie im zweiten Ausführungsbeispiel mittels eines konischen Spannbolzens 8. Die Anlagefläche 2' für ein zu spannendes Werkstück wird durch einen auf dem Grundkörper 2 aufgeschraubten Anlagering 2a gebildet.

Das ringförmige Abschlussstück 7 der Spannbüchse 3 ist wie in den vorangehenden Ausführungsbeispielen gegenüber dem Außenumfang des Spannbolzens 8 gleitend gelagert. Der Endbereich des Spannbolzens 8 und/oder des ringförmigen Abschlussstücks 7 sind hier so ausgeformt, dass sie nicht nur das übliche Spannwerkzeug, sondern auch eine Reitstockspitze 15 aufnehmen können. Der Spanndorn 1 kann somit mittels eines Reitstocks gespannt und zentriert werden, um die Stabilität gegenüber quer wirkenden Bearbeitungskräften und die Zentriergenauigkeit weiter zu erhöhen.

Von weiterem Interesse ist im dritten Ausführungsbeispiel der Verlauf der Biegestege 5 und Verlängerungsstege 6 der Spreizbüchse 3. Während erfindungsgemäß die Biegestege in der nicht gespreizten Freigabeposition gegenüber der Längsachse des Spanndorns 1 um einen Winkel von etwa 6 Grad radial nach außen geneigt sind, verlaufen die Verlängerungsstege 6 in den ersten beiden Ausführungsbeispielen in etwa achsparallel. Dies kann zu einer leichten Verkippung der Spannbacken 4 beim Aufspreizen und damit zu einer Konizität der Spannfläche führen. Im dritten Ausführungsbeispiel wird dies weitestgehend vermieden, indem die Verlängerungsstege 6 gegenüber der Längsachse entgegengesetzt zu den Biegestegen 5 geneigt sind. Der Verlauf der Biegestege 5 und Verlängerungsstege 6 ist hier spiegelsymmetrisch gegenüber einer Querebene durch das Zentrum der Spannbacken 4. Da die Biegekräfte der Biegestege 5 und Verlängerungsstege 6 somit in etwa gleich und spiegelbildlich gleich gerichtet groß sind, kommt es zu keiner Verkippung oder Konizität der Spannflächen.

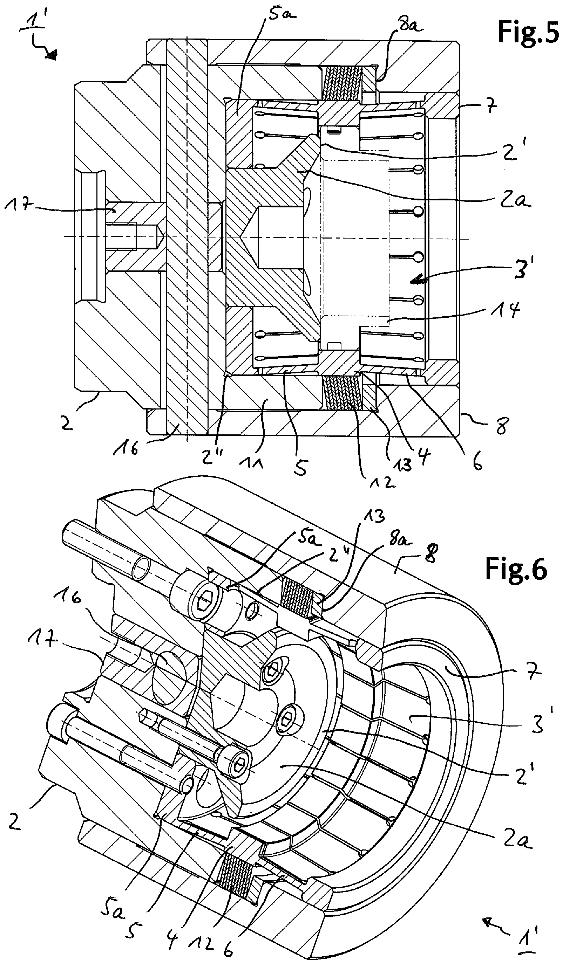

In den Figuren 5 und 6 schließlich ist ein Ausführungsbeispiel für ein erfindungsgemäßes Spannfutter 1' gezeigt, mit dem ein Werkstück 14 an seinem Außendurchmesser gespannt werden kann. Das Spannfutter 1' weist wiederum einen Grundkörper 2 auf, der auf die Arbeitsspindel einer Werkzeugmaschine aufgeschraubt wird. Der Grundkörper 2 hat auf der Vorderseite zentral eine zylindrische Ausnehmung 2", in die eine längsgeschlitzte Spannhülse 3' eingesetzt ist, die, bei kinematischer Umkehr des Wirkprinzips, der Spreizbüchse 3 der vorangehenden Ausführungsbeispiele entspricht. Die Spannhülse 3' hat einen ringförmigen Fußbereich 5a, an dem sie mit dem Grundkörper 2 verschraubt ist. Mit dem Fußbereich 5a sind über entsprechende Biegestege 5 Spannbacken 4 verbunden. An der gegenüberliegenden Seite führen biegeelastische Verlängerungsstege 6 zu einem ringförmigen Abschlussteil 7, über welches die einzelnen Verlängerungsstege 6 der Spannhülse 3' miteinander verbunden sind.

Die Spannhülse 3' ist von einer äußeren Hülse 8 umgeben, die axial verschiebbar am Spannfutter 1' gelagert ist. Die äußere Hülse 8 ist über einen Querbolzen 16 mit einem zentralen Betätigungselement 17 verbunden, das an eine Kraftspanneinrichtung einer Werkzeugmaschine angeschlossen wird. Mit einer von einer Stufe in ihrem Innendurchmesser gebildeten Schulter 8a drückt die äußere Hülse 8 über einen als Distanzstück 13 wirkenden Ring auf ein oder mehrere RINGSPANN®-Scheiben 12, die sich nach außen hin an der äußeren Hülse 8 abstützen. Axial liegen die RINGSPANN®-Scheiben 12 auf dem als Anschlag 11 dienenden Rand des Grundkörpers 2. Wird das zentrale Betätigungselement 17 durch eine Spannkraft nach links bewegt, so drückt die äußere Hülse 8 über die Schulter 8a die RINGSPANN®-Scheiben gegen den Anschlag 11 des Grundkörpers 2. Da die RINGSPANN®-Scheiben 12 sich mit ihrem Außendurchmesser an der äußeren Hülse 8 abstützen, verringert sich deren Innendurchmesser und drückt so die Spannbacken 4 gegen ein zu spannendes Werkstück 14.

Die axiale Anlagefläche 2' für das Werkstück 14 bildet ein im Inneren der Spannhülse 3' verschraubtes Anlageteil 2a. Wie im vorangegangenen Ausführungsbeispiel sind Biegestege 5 und Verlängerungsstege 6 gegenüber der axialen Richtung geneigt, wobei die Neigungsrichtung der Biegestege 5 hier aufgrund der kinematisch umgekehrten Spannrichtung radial nach innen zu den Spannbacken verläuft. Aufgrund der Neigung der Biegestege 5 verkürzt sich beim Spannen der Abstand zwischen Spannbacken 4 und Fußbereich 5a der Spannhülse, so dass das Werkstück 14 beim Spannen einen axialen Rückzug und eine axiale Anpresskraft gegen die Anlagefläche 2' erfährt.

Der Außenumfang des ringförmigen Abschlussteils 7 der Spannhülse 3' ist gleitend in der äußeren Hülse 8 gelagert, so dass sich eine hohe Steifigkeit gegenüber Querkräften ergibt.

In Figur 6 ist das Spannfutter 1' in einer perspektivischen, aufgeschnittenen Darstellung ohne ein zu spannendes Werkstück gezeigt. Deutlich zu erkennen ist die Schlitzung der Spannhülse 3' und die Befestigung von Spannhülse 3' und Anschlagteil 2a am Grundkörper 2 mittels entsprechender Verbindungsschrauben.

Neben den in den Ausführungsbeispielen gezeigten Betätigungsmechanismen zum Verstellen der Spannbacken mittels RINGSPANN®-Scheiben oder konischer Anlageflächen sind auch andere Anordnungen zum Aufspreizen bzw. Spannen der Spannbacken vorstellbar, wie etwa eine hydraulische Betätigung.

In den beschriebenen Ausführungsbeispielen können außerdem die Längsschlitze der Spreizbüchse 3 bzw. der Spannhülse 3' mit einer elastischen Masse, z.B. Gummi, ausgefüllt sein, um ein Eindringen von Schmutz und Spänen zu vermeiden.

Eine weitere Verbesserung kann bei den gezeigten Spanndornen dadurch erreicht werden, dass der Spannbolzen mit dem Abschlussring 7 und dem Grundkörper 2 drehfest aber axial verschiebbar verbunden wird. Dies kann mittels einer entsprechenden Verdrehsicherung wie etwa einer Längsverzahnung oder Nut und Feder-Geometrie von Spannbolzen 8 einerseits und Abschlussring sowie Grundkörper anderseits, bewirkt werden. Hierdurch wird erreicht, dass das Werkstück oder Werkzeug in Umfangsrichtung drehsteifer gehalten wird.

## Patentansprüche

1. Spannvorrichtung (1, 1') zum Spannen eines Bauteiles, insbesondere eines Werkstückes (14) oder Werkzeugs, mit einer Anzahl entlang eines Umfanges verteilter Spannbacken (4), die über entsprechende elastische Biegestege (5) mit einem Grundkörper (2) verbunden sind, wobei die Spannbacken (4) mittels einer axial beweglichen Betätigungsvorrichtung (8, 12) in einer im Wesentlichen radialen Richtung von einer Freigabeposition in eine Halteposition verstellbar sind, wobei die Betätigungsvorrichtung derart ausgebildet ist, dass sie beim Spannen eine gegen die Federkraft der Biegestege gerichtete radiale Spannkraft auf die Spannbacken ausübt,
**dadurch gekennzeichnet, dass**
die Biegestege (5) in ihrer Freigabeposition gegenüber einer achsparallelen Richtung radial in Richtung ihrer jeweiligen Haltepositionen geneigt sind und dass die Spannvorrichtung eine gegenüber dem Grundkörper (2) feste axiale Anlagefläche (2') aufweist, gegen welche das Bauteil (14) beim Spannen eine axiale Andruckkraft erfährt.

2. Spannvorrichtung nach Anspruch 1, bei der die Biegestege (5) in der Freigabeposition gegenüber der achsparallelen Richtung um einen Winkel von 3 bis 12 Grad, vorzugsweise etwa 5 bis etwa 10 Grad, höchstvorzugsweise etwa 6 Grad geneigt sind.

3. Spannvorrichtung, nach Anspruch 1, bei der in Verlängerung der Biegestege (5) über die Spannbacken (4) hinausstehende Verlängerungsstege (6) vorgesehen sind, die an ihren Enden über ein ringförmiges Abschlussstück (7) miteinander verbunden sind.

4. Spannvorrichtung nach Anspruch 3, bei der die Verlängerungsstege (6) in der Freigabeposition entgegengesetzt zu den Biegestegen (5) geneigt sind.

5. Spannvorrichtung nach Anspruch 4, bei der die Biegestege (5) und die Verlängerungsstege (6) in etwa spiegelsymmetrisch zu einer radial durch die Spannbacken (4) verlaufenden Spiegelebene angeordnet sind.

6. Spannvorrichtung nach einem der vorangehenden Ansprüche, bei der die Biegestege (5) von Segmentstreifen einer geschlitzten Spreizbüchse (3) oder Spannhülse (3') gebildet werden.

7. Spannvorrichtung nach einem der vorangehenden Ansprüche, bei der die Betätigungsvorrichtung ein Betätigungselement (8) umfasst, welches bei einer Bewegung in eine axiale Betätigungsrichtung eine radiale Spannkraft auf die Spannbacken (4) ausübt.

8. Spannvorrichtung nach Anspruch 7, bei der die Betätigungsvorrichtung ein elastisches Element (12) umfasst, welches bei axialer Kompression durch das Betätigungselement (8) eine radiale Dimensionsänderung erfährt und dabei die radiale Spannkraft auf die Spannbacken (4) ausübt.

9. Spannvorrichtung nach Anspruch 8, bei der das elastische Element durch flachkegelige Federscheiben (12), die innen und außen geschlitzt sind, gebildet ist.

10. Spannvorrichtung nach Anspruch 7, bei der das Betätigungselement (8) eine konische Gleitfläche (8') aufweist, die mit entsprechend geformten Anlageflächen (4') der Spannbacken (4) zusammenwirkt, um eine radiale Spannkraft auf die Spannbacken (4) auszuüben.

11. Spannvorrichtung nach Anspruch 3 und einem der Ansprüche 8 bis 10, bei der das ringförmige Abschlussstück (7) axial gleitend an dem Betätigungselement (8) gelagert ist.

12. Spannvorrichtung nach Anspruch 11, wobei das Abschlussstück (7) axial verschiebbar aber drehfest mit dem Grundkörper (2) verbunden ist.

13. Spannvorrichtung nach einem der vorangehenden Ansprüche, welche als Spanndorn (1) zum Innenspannen eines Bauteiles (14) ausgebildet ist.

14. Spannvorrichtung nach einem der Ansprüche 1 bis 12, welche als Spannfutter (1') zum Außenspannen eines Bauteiles (14) ausgebildet ist.

15. Spannvorrichtung nach einem der vorangehenden Ansprüche, welche an einem freien Ende, insbesondere im Endbereich des Spannbolzens 8 und/oder des ringförmigen Abschlussstücks 7, zur Aufnahme einer Reitstockspitze ausgeformt ist.

16. Werkzeugmaschine mit einer Spannvorrichtung (1, 1') nach einem der vorgehenden Ansprüche.

## Claims

1. Clamping device (1, 1') for clamping a component, especially a workpiece (14) or tool, having a number of clamping jaws (4) distributed along a periphery, which clamping jaws are connected to a main body (2) by way of corresponding resilient flexural ribs (5), wherein the clamping jaws (4) are displaceable in a substantially radial direction from a release position to a holding position by means of an axially movable actuating device (8, 12), the actuating device being constructed in such a way that during clamping it exerts on the clamping jaws a radial clamping force directed against the resilient force of the flexural ribs,
**characterised in that**
the flexural ribs (5), in their release position, are inclined with respect to an axially parallel direction radially in the direction of their respective holding positions, and the clamping device has an axial bearing surface (2') which is fixed with respect to the main body (2) and against which the component (14) is subject to an axial pressing force during clamping.

2. Clamping device according to claim 1, wherein the flexural ribs (5), in the release position, are inclined with respect to the axially parallel direction by an angle of from 3 to 12 degrees, preferably from approximately 5 to approximately 10 degrees, most preferably approximately 6 degrees.

3. Clamping device according to claim 1, wherein in extension of the flexural ribs (5) there are provided extension ribs (6) which project beyond the clamping jaws (4) and which are connected to one another by an annular end piece (7).

4. Clamping device according to claim 3, wherein the extension ribs (6), in the release position, are inclined oppositely to the flexural ribs (5).

5. Clamping device according to claim 4, wherein the flexural ribs (5) and the extension ribs (6) are arranged approximately mirror-symmetrically with respect to a plane of mirror symmetry running radially through the clamping jaws (4).

6. Clamping device according to any one of the preceding claims, wherein the flexural ribs (5) are formed by segment strips of a slotted expanding bush (3) or clamping sleeve (3').

7. Clamping device according to any one of the preceding claims, wherein the actuating device comprises an actuating element (8) which, on movement in an axial actuating direction, exerts a radial clamping force on the clamping jaws (4).

8. Clamping device according to claim 7, wherein the actuating device comprises a resilient element (12) which, on being compressed axially by the actuating element (8), undergoes a change in radial dimension and in so doing exerts the radial clamping force on the clamping jaws (4).

9. Clamping device according to claim 8, wherein the resilient element is formed by shallow-conical disc springs (12) which are internally and externally slotted.

10. Clamping device according to claim 7, wherein the actuating element (8) has a conical slide surface (8') which co-operates with correspondingly shaped bearing surfaces (4') of the clamping jaws (4) in order to exert a radial clamping force on the clamping jaws (4).

11. Clamping device according to claim 3 and any one of claims 8 to 10, wherein the annular end piece (7) is mounted so as to slide axially on the actuating element (8).

12. Clamping device according to claim 11, wherein the end piece (7) is connected to the main body (2) so as to be axially displaceable but fixed against rotation.

13. Clamping device according to any one of the preceding claims, which is in the form of a clamping mandrel (1) for internal clamping of a component (14).

14. Clamping device according to any one of claims 1 to 12, which is in the form of a clamping chuck (1') for external clamping of a component (14).

15. Clamping device according to any one of the preceding claims, which at a free end, especially in the end region of the clamping pin (8) and/or the annular end piece (7), is shaped for receiving a tailstock centre.

16. Machine tool having a clamping device (1, 1') according to any one of the preceding claims.

## Revendications

1. Dispositif de serrage (1, 1') dévolu à l'ablocage d'une pièce structurelle, en particulier d'une pièce (14) à usiner ou d'un outil, pourvu d'un certain nombre de mâchoires de serrage (4) réparties le long d'un pourtour et reliées à un corps d'embase (2) par l'intermédiaire de barrettes de flexion (5) correspondantes, douées d'élasticité, lesdites mâchoires de serrage (4) pouvant être transposées d'un emplacement de libération à un emplacement de retenue, dans une direction substantiellement radiale, au moyen d'un dispositif d'actionnement (8, 12) doué de mobilité axiale, ledit dispositif d'actionnement étant réalisé de façon telle qu'il applique auxdites mâchoires de serrage, lors de l'ablocage, une force radiale de serrage dirigée à l'opposé de la force élastique desdites barrettes de flexion,
**caractérisé par le fait que**
les barrettes de flexion (5), occupant leur emplacement de libération, sont inclinées radialement en direction de leurs emplacements respectifs de retenue par rapport à une direction parallèle à l'axe ; et **par le fait que** ledit dispositif de serrage est muni d'une surface axiale d'appui (2'), fixe par rapport au corps d'embase (2), et contre laquelle la pièce structurelle (14) est soumise à une force de pression axiale lors de l'ablocage.

2. Dispositif de serrage selon la revendication 1, dans lequel les barrettes de flexion (5) occupant l'emplacement de libération sont inclinées, par rapport à la direction parallèle à l'axe, d'un angle de 3 à 12 degrés, de préférence d'environ 5 à environ 10 degrés, et d'environ 6 degrés avec préférence maximale.

3. Dispositif de serrage selon la revendication 1, dans lequel des barrettes d'extension (6) prévues dans le prolongement des barrettes de flexion (5) et faisant saillie au-delà des mâchoires de serrage (4) sont reliées les unes aux autres, à leurs extrémités, par l'intermédiaire d'une pièce annulaire de terminaison (7).

4. Dispositif de serrage selon la revendication 3, dans lequel les barrettes d'extension (6) sont inclinées, à l'emplacement de libération, en sens inverse des barrettes de flexion (5).

5. Dispositif de serrage selon la revendication 4, dans lequel les barrettes de flexion (5) et les barrettes d'extension (6) sont agencées à peu près spéculairement par rapport à un plan de symétrie spéculaire passant radialement par les mâchoires de serrage (4).

6. Dispositif de serrage selon l'une des revendications précédentes, dans lequel les barrettes de flexion (5) sont formées par des segments longilignes d'une douille déployable (3) ou d'une douille de serrage (3') fendue.

7. Dispositif de serrage selon l'une des revendications précédentes, dans lequel le dispositif d'actionnement inclut un élément d'actionnement (8) appliquant, aux mâchoires de serrage (4), une force radiale de serrage au cours d'un mouvement dans une direction axiale d'actionnement.

8. Dispositif de serrage selon la revendication 7, dans lequel le dispositif d'actionnement inclut un élément élastique (12) qui, lors d'une compression axiale exercée par l'élément d'actionnement (8), subit une variation dimensionnelle dans le sens radial et applique alors la force radiale de serrage aux mâchoires de serrage (4).

9. Dispositif de serrage selon la revendication 8, dans lequel l'élément élastique est constitué par des rondelles élastiques (12) de forme tronconique aplatie, fendues intérieurement et extérieurement.

10. Dispositif de serrage selon la revendication 7, dans lequel l'élément d'actionnement (8) présente une surface tronconique de glissement (8') qui coopère avec des surfaces d'appui (4') des mâchoires de serrage (4), dotées de formes correspondantes, afin d'appliquer une force radiale de serrage auxdites mâchoires de serrage (4).

11. Dispositif de serrage selon la revendication 3 et l'une des revendications 8 à 10, dans lequel la pièce annulaire de terminaison (7) est montée à glissement axial sur l'élément d'actionnement (8).

12. Dispositif de serrage selon la revendication 11, la pièce de terminaison (7) étant reliée au corps d'embase (2) avec faculté de coulissement axial, mais avec verrouillage rotatif.

13. Dispositif de serrage selon l'une des revendications précédentes, réalisé sous la forme d'une broche de serrage (1) dévolue à l'ablocage intérieur d'une pièce structurelle (14).

14. Dispositif de serrage selon l'une des revendications 1 à 12, réalisé sous la forme d'un mandrin de serrage (1') dévolu à l'ablocage extérieur d'une pièce structurelle (14).

15. Dispositif de serrage selon l'une des revendications précédentes, ménagé à une extrémité libre, notamment dans la région extrême de l'axe de serrage (8) et/ou de la pièce annulaire de terminaison (7), en vue de recevoir une contre-pointe.

16. Machine-outil équipée d'un dispositif de serrage (1, 1') conforme à l'une des revendications précédentes.
